# EUROPEAN PATENT APPLICATION

(11) **EP 2 511 684 A1**
(43) Date of publication of application: **17.10.2012**
(21) Application number: 09852051.3
(22) Date of filing: 09.12.2009
(51) Int. Cl.: G01L 19/00, G01L 9/00, G01L 19/14, H01H 35/34

(54) **STRUCTURE FOR CONNECTION BETWEEN PRESSURE SENSING SECTION OF PRESSURE SENSITIVE DEVICE AND FEMALE THREADED COUPLING**

(71) Applicant: Kabushiki Kaisha Saginomiya Seisakusho, Tokyo 165-0033 (JP)
(72) Inventor: HONDOH Masahide, Sayama-shi Saitama 350-1395 (JP); IZUMIYA Kazuhiro, Sayama-shi Saitama 350-1395 (JP)
(74) Representative: Grünecker, Kinkeldey, Stockmair & Schwanhäusser
(86) International application number: PCT/JP2009/070582
(87) International publication number: WO 2011/070655

(57) **Abstract**

A pressure responsive apparatus introduces a fluid via a female screw joint 1 into a pressure vessel including a cap member 21 to detect a fluid pressure using a pressure sensing unit 2. The female screw joint 1 is reliably secured to the cap member 21 without brazing for simplified manufacturing and reduced intermediate stocks. A stainless-steel intermediate joint 3 resides between a brass female screw joint 1 and a stainless-steel cap member 21. A sloping surface 13 extends between a threaded hole 11 and a cylindrical hole 12 of the female screw joint 1. A cylinder portion 31 of the intermediate joint 3 is fitted into the cylindrical hole 12 of the female screw joint 1. Peripheral portions of the interface between the flat portion 31A of the cylinder portion 31 and flat portion 21A of the cap member 21 is laser-welded. The sloping flange 32 of the intermediate joint 3 is pressed against the sloping surface 13 by a male-threaded joint 5 of a conduit (FIG. 3), and the sloping surface 13 is brought into close contact with the sloping flange 32 of the intermediate joint 3.

## Description

### Technical Field

The present invention relates to a pressure responsive apparatus adapted to introduce fluid therein and obtain information in response to the pressure of the fluid, and more particularly to a connection structure connecting a pressure sensing unit to a female screw joint. The apparatus may include a pressure switch adapted to output an on/off-signal in response to change in the fluid pressure of a cooling medium in a refrigeration cycle, and a pressure sensor adapted to detect fluid pressure and output a pressure signal.

### Background Art

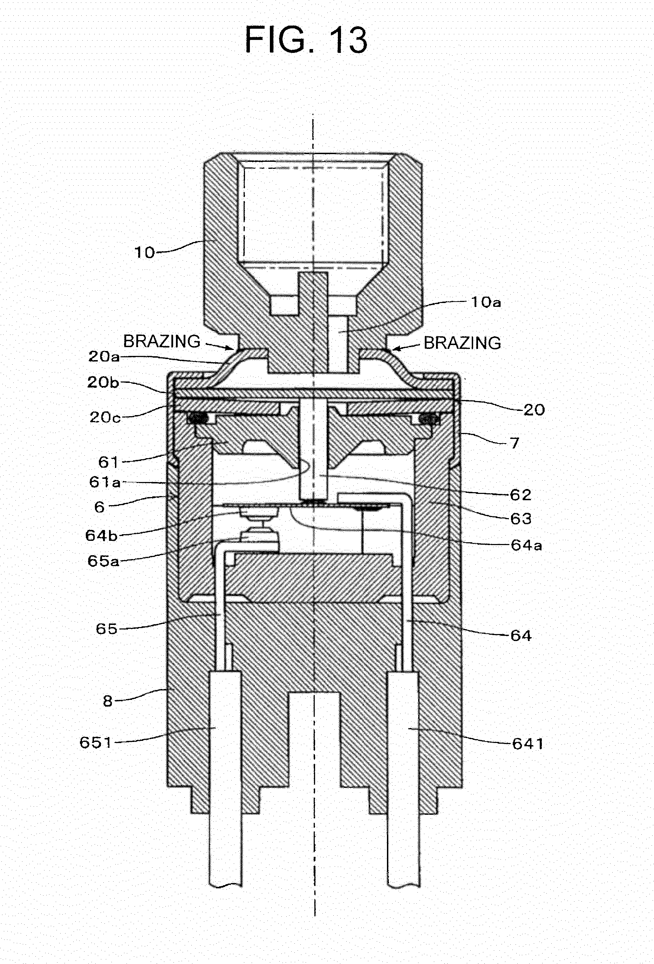

FIG. 13 illustrates an example of a conventional pressure switch. The pressure switch comprises a joint 10 connected to a conduit through which a fluid flows whose pressure is to be detected, a pressure sensing unit 20, a switch 6, a swaging plate 7, and a case 8 made of resin.

The pressure sensing unit 20 comprises a cap member 20a connected to the joint 10; a circular disk 20b, the circular disk 20b and the cap member 20a constituting a pressure vessel; and a washer-like stopper 20c that restricts deformation of the circular disk 20b within a predetermined amount.

The switch 6 comprises a guide 61 having an axial hole 61a provided at the centre thereof, a shaft 62 inserted in a fitting manner into the axial hole 61a of the guide 61, and a cylindrical terminal platform 63 adapted to be brought into fitting engagement with the peripheral portion of the guide 61.

The circumferential portions of the cap member 20a, the circular disk 20b, and the stopper 20c are secured in a swaged manner to an end of the terminal platform 63 by a swaging plate 7.

A C-terminal 64 and an L-terminal 65 are secured to the terminal platform 63. A contact plate 64a is attached to the C-terminal 64. A C-contact 64b is attached to the contact plate 64a, and an L-contact 65a is attached to the L-terminal 65. Also, a lead wire 641 is connected to the C-terminal 64, and lead wire 651 is connected to the L-terminal 65. The lead wires 641, 651 are each drawn out of the case 8.

Given the above-described configuration, the fluid is introduced via the introducing path 10a of the joint 10 into the pressure vessel constituted by the cap member 20a and the circular disk 20b, and the circular disk 20b is deformed in response to the fluid pressure so as to press the shaft 62.

When the pressure reaches a predetermined pressure level, the C-contact 64b, which functions in conjunction with the shaft 62, is brought into contact with the L-contact 65a, so that the switch is turned on. In this manner, it is possible to detect the fact that the fluid pressure has reached the predetermined pressure level.

It is contemplated that the joint 10 is brass or brazen, the cap member 20a is made of stainless steel (SUS), and the joint 10 and the cap member 20a are joined by brazing. Also, in a manner similar to that in this conventional pressure switch, a pressure switch where the joint and the cap member are joined by brazing is disclosed for example in the Japanese Patent Application Laid-Open Publication No. 2002-55012 (patent literature PTL 1). Also, the Japanese Patent Application Laid-Open Publication No. H09-120762 (patent literature PTL 2) discloses an attachment part 112, which serves as the joint, is attached to a disk housing 92, which serves as the cap member, in an airtight manner. Specific mode of mounting is not described in the patent literature PTL 2.

### Citations List

### Patent Literature

PTL 1: Japanese Patent Application Laid-Open Publication No. 2002-55012
PTL 2: Japanese Patent Application Laid-Open Publication No. H09-120762

### Summary of the Invention

### Technical Problem

In the manufacturing process of the pressure switch in the patent literature PTL 1, brazing operation for the joint and the cap member is performed using burner brazing and furnace brazing techniques. As a result, it is necessary to perform acid pickling to eliminate flux and burnt deposits. It is appreciated that acid pickling is not favorable in view of environmental protection and pollution control.

Also, in the manufacturing process of the conventional pressure switch, a product in process is created by joining the joint 10 and the cap member 20a by means of brazing and then the in-process product, the circular disk 20b, and the stopper 20c are put together such that they are plasma-welded, and thus the pressure sensing unit 20 is manufactured. Finally, the pressure sensing unit 20 is mounted to the switch 6.

As a result, there exists the product in progress joining the joint 10 and the cap member 20a, and the joint 10 is previously joined with the cap member 20a. Such manufacturing process is not flexible considering various types of joints with different specs.

When the pressure switch of this type is connected to the conduit in which the fluid flows, the joint of the conduit and the joint of the pressure switch are connected to each other via threaded connection. For example, in a case of such a type as disclosed in the patent literature PTL 1, the joint 10 of the pressure switch is screwed into the joint which is a female screw of the conduit.

In the case of such types as illustrated in FIG. 13 and disclosed in the patent literature PTL 2, a male-threaded joint of the conduit is screwed into the joint 10 or the attachment part 112. In any case, the joint of the conduit and the joint of the pressure switch are inversely rotated with respect to each other. In general, since the joint of the conduit is a fixed type, it is necessary to rotate the joint of the pressure switch.

As a result, the problem of rotation arises during mounting of the pressure switch. For example, in the example shown in FIG. 13, a drawback is that the C-terminal 64 and the lead wires 641, 651 (cables) connected to the L-terminal 65 may be twisted. Also, since the switch body (case 8) is larger than the joint 10, the switch body is easy to be held. However, when the switch body that has been held is rotated, then torsional torque may cause change in the property of the pressure sensing unit 20 or damage to the pressure sensing unit 20.

In view of the above, an object of the present invention is, in a pressure responsive apparatus for obtaining information in response to the fluid pressure, to solve the problem involved in the brazing operation by attaching the female screw joint to the cap member without using the brazing technique, maintain airtightness between the cap member and the conduit while the screw joint is connected to the conduit, and prevent twisting of the lead wires and damage to the body without rotation of the body when the pressure responsive apparatus is attached to the conduit.

### Solution to the Problem

A First aspect of the present invention provides a connection structure connecting a pressure sensing unit to a female screw joint in a pressure responsive apparatus. The female screw joint is made of a metallic material and adapted to be connected to a male-threaded joint of a conduit for flowing fluid therethrough whose pressure is to be detected. The pressure sensing unit includes a metallic cap member into which the fluid from the female screw joint is introduced.

The connection structure comprises (a) the female screw joint including (i) a threaded hole into which the male-threaded joint of the conduit is screwed, (ii) a cylindrical hole having a diameter smaller than that of the threaded hole, and (iii) a sloping surface along an entire inner circumferential region connecting the threaded hole to the cylindrical hole, the sloping surface being tapered with its diameter gradually increased from the cylindrical hole toward the threaded hole; and (b) an intermediate joint made of a same metallic material as that of the cap member, the intermediate joint including (i) a cylinder portion complementary to the cylindrical hole of the female screw joint, and (ii) a sloping flange provided at an entire periphery of an end of the cylinder portion, the end being proximate to the threaded hole, the sloping flange extending in a sloping manner with gradually increasing diameter.

The cylinder portion of the intermediate joint is adapted to be inserted from a side proximate to the threaded hole of the female screw joint into the cylindrical hole so that the sloping flange of the intermediate joint is opposed to the sloping surface of the female screw joint.

An end of the cylinder portion of the intermediate joint is joined by welding to the cap member. The male-threaded joint is screwed into the threaded hole of the female screw joint, and the sloping flange is pressed by an end of the male-threaded joint so that the interface between the sloping flange and the sloping surface is sealed.

A second aspect of the present invention provides the connection structure connecting the pressure sensing unit to the female screw joint in the pressure responsive apparatus in the context of the first aspect thereof, further characterised by the fact that the sloping surface of the female screw joint is formed in a shape of a circular arc surface raised toward the sloping flange.

A third aspect of the present invention provides the connection structure connecting the pressure sensing unit to the female screw joint in the pressure responsive apparatus in the context of the first aspect thereof, further characterised by a copper sheet provided between the sloping flange of the intermediate joint and the male-threaded joint.

A fourth aspect of the present invention provides the connection structure connecting the pressure sensing unit to the female screw joint in the pressure responsive apparatus in the context of the first aspect thereof, further characterised by the fact that the intermediate joint is made of a clad material constituted by an outer first layer made of the same metallic material as that of the cap member and an inner second layer made of a copper material.

A fifth aspect of the present invention provides the connection structure connecting the pressure sensing unit to the female screw joint in the pressure responsive apparatus in the context of the first aspect thereof, further characterised by a plurality of concentric grooves provided on an inner surface of the sloping flange of the intermediate joint. The concentric grooves are concentric with the sloping flange.

### Advantageous Effects of the Invention

The connection structure connecting the pressure sensing unit to the female screw joint in the pressure responsive apparatus according to the first aspect of the present invention has the following advantageous effects. The intermediate joint and the cap member can be readily welded together by application of laser beam on the interface between the intermediate joint and the cap member.

Accordingly, the process of the acid pickling can be eliminated. Also, since the intermediate joint and the cap member can be made of stainless steel, it is possible to prevent deposition of fume particles caused by evaporation of zinc or occurrence of void formation and allows the interface to have improved finish. Further, since the intermediate joint and the female screw joint are not joined together, when the pressure responsive apparatus is attached to the conduit, the female screw joint can freely rotate with respect to the male-threaded joint and the pressure sensing unit prior to screwing the male-threaded joint into the female screw joint.

Accordingly, it is made possible to the pressure sensing unit does not need to be rotated, and only the female screw joint is rotated, to be screwed onto the male-threaded joint, which makes it possible to prevent twisting of the lead wires of the pressure sensing unit and damage to the body.

Also, since the brazing is not performed, thermal effect upon other components can be reduced. Since the pressure sensing unit having the cap member is previously mounted, the intermediate joint connected to the female screw joint can be afterward joined with the cap member, an intermediate stock does not need to be provided, the intermediate stock being constituted by the female screw joint and the cap member joined together.

The connection structure connecting the pressure sensing unit to the female screw joint in the pressure responsive apparatus according to the second aspect ahs the following advantageous effects in addition to those achieved by the first aspect. The sloping surface of the female screw joint is configured as the circular arc surface raised toward the sloping flange.

When the sloping flange is pressed by the end of the male-threaded joint and the sloping surface is brought into contact with the sloping flange, the circle portion residing on the raised circumferential portion of the sloping surface is first brought into contact with the sloping flange and the area of contact between the sloping surface and the sloping flange increases starting from the position of the circle, so that the firm attachment between the sloping flange and the sloping surface is further improved.

The connection structure connecting the pressure sensing unit to the female screw joint in the pressure responsive apparatus according to the third aspect has the following advantageous effects in addition to those achieved by the first aspect. Since the copper sheet is provided between the sloping flange of the intermediate joint and the male-threaded joint, the firm attachment between the sloping flange and the male-threaded joint is further improved by plastic deformation of the copper sheet when the female screw joint is tightly connected to the male-threaded joint.

The connection structure connecting the pressure sensing unit to the female screw joint in the pressure responsive apparatus according to the fourth aspect has the following advantageous effects in addition to those achieved by the first aspect. When the female screw joint is tightly connected to the male-threaded joint, firm attachment between the sloping flange and the male-threaded joint is improved by virtue of the plastic deformation of the inner second layer made of copper material of the intermediate joint.

The connection structure connecting the pressure sensing unit to the female screw joint in the pressure responsive apparatus according to the fifth aspect has the following advantageous effects in addition to those achieved by the first aspect. Since the concentric grooves are formed on the inner surface of the sloping flange of the intermediate joint, the sloping flange and the male-threaded joint are joined via a plurality of concentric portions on the both sides of the grooves, so that the firm attachment between the sloping flange and the male-threaded joint is further improved.

### Brief Description of the Drawings

FIG 1 is a vertical cross-sectional view of a pressure switch according to a first embodiment of the present invention;
FIG 2 is an enlarged cross-sectional view of the principal part of the pressure switch;
FIG. 3 is a vertical cross-sectional view in which the pressure switch is connected to a male-threaded joint of a conduit;
FIG 4 is an external view of the pressure switch;
FIGS. 5A to 5E illustrate exemplary configurations for improved firm attachment between an intermediate joint and the male-threaded joint in one embodiment;
FIG 6 is a vertical cross-sectional view of a pressure sensor according to a second embodiment of the present invention;
FIGS. 7A to 7F illustrate exemplary pusher members adapted to be fitted into the intermediate joint in one embodiment;
FIGS. 8A to 8F illustrate other exemplary pusher members adapted to be fitted into the intermediate joint in one embodiment;
FIGS. 9A to 9I illustrate pusher members adapted to be pressed into a connection hole of the intermediate joint in one embodiment;
FIGS. 10A to 10D illustrate an exemplary mode of mounting of the pusher member;
FIG. 11 is an enlarged cross-sectional view of the principal part in a third embodiment of the present invention;
FIG 12 is an enlarged cross-sectional view of the principal part in a fourth embodiment of the present invention; and
FIG 13 is a vertical cross-sectional view of a conventional pressure switch.

### Detailed Description of Exemplary Embodiments

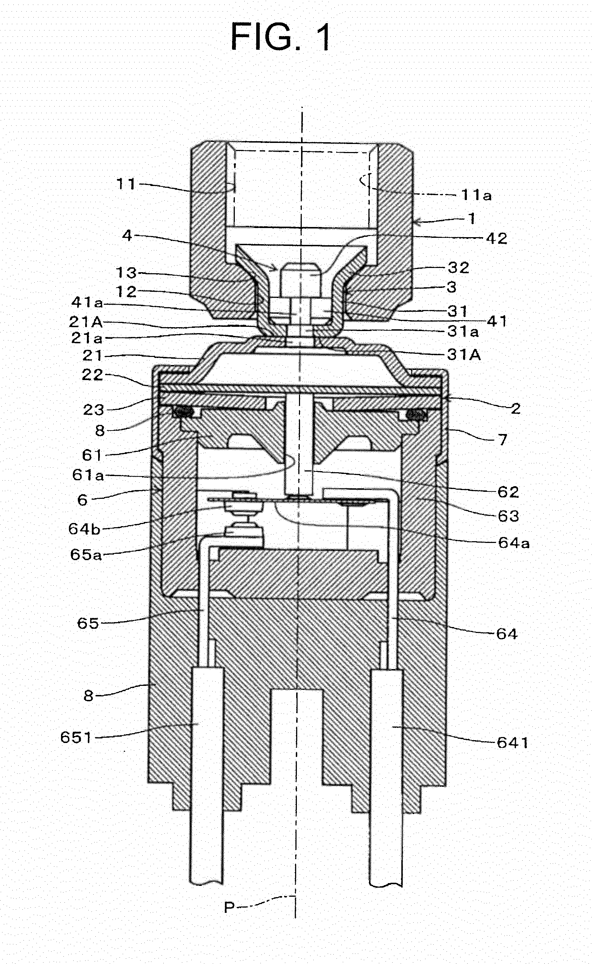

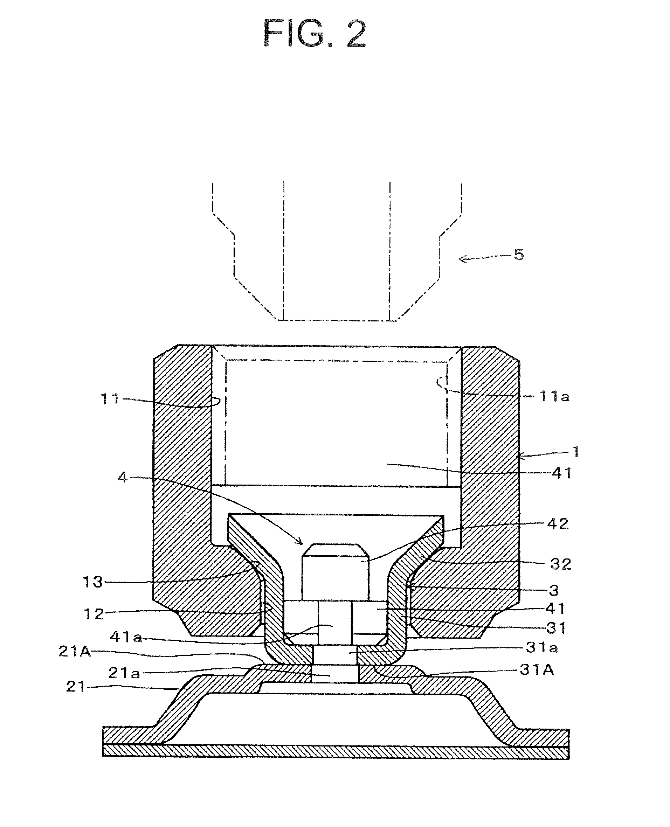

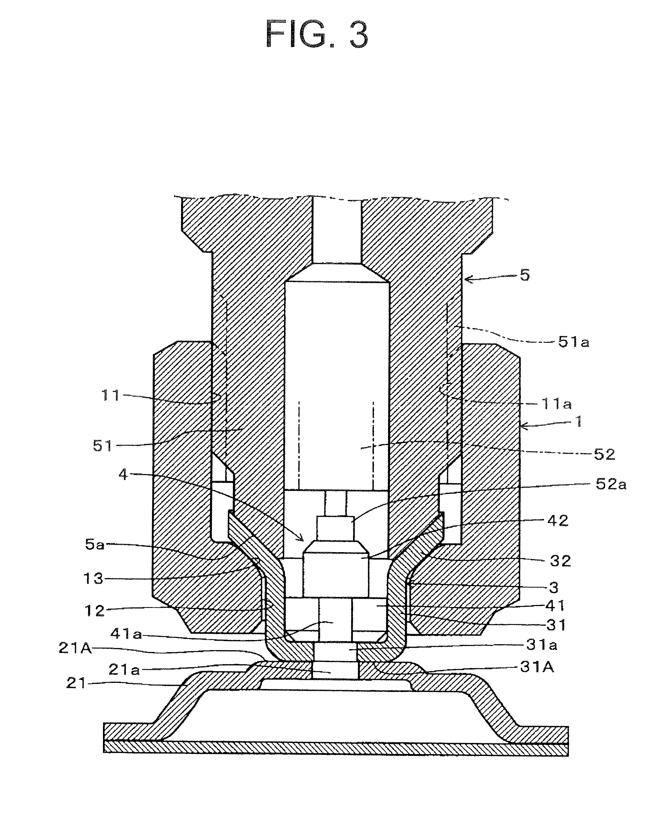

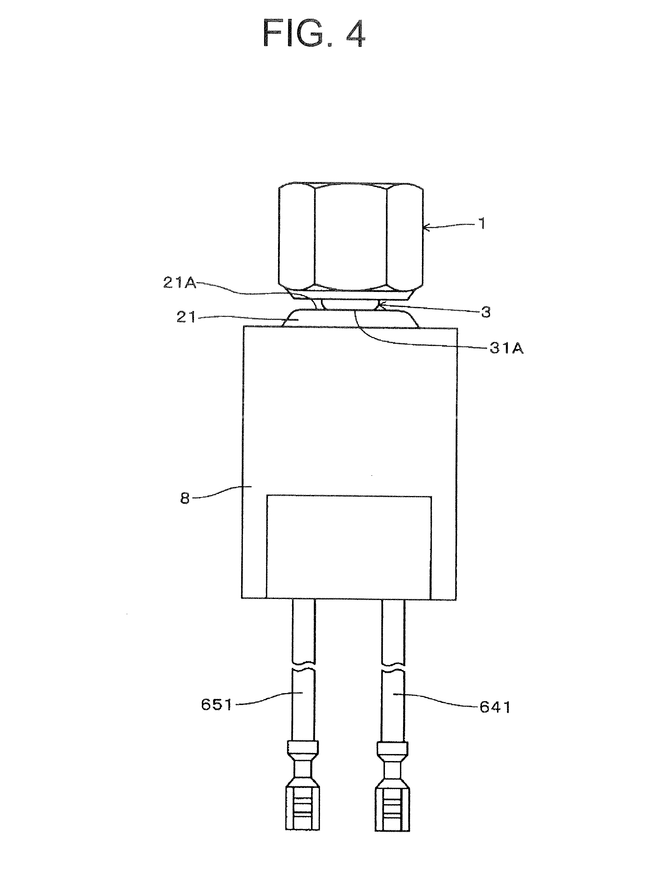

A pressure switch having a connection structure according to one embodiment of the present invention is described below with reference to the drawings. FIG. 1 is a vertical cross-sectional view of a pressure switch according to the first embodiment. FIG. 2 is an enlarged cross-sectional view of the principal part of the same pressure switch. FIG 3 is a vertical cross-sectional view in which the pressure switch is attached to the male-threaded joint of the conduit. FIG. 4 is an external view of the pressure switch. The same or like elements as in FIG. 13 are indicated by the same reference signs and redundant detailed description thereof will be omitted.

The pressure switch in one embodiment includes an intermediate joint 3 provided between a female screw joint 1 and a cap member 21 of a pressure sensing unit 2. The pressure sensing unit 2, the cap member 21, a circular disk 22 and a stopper 23 each have the same structure and functionality as in the conventional configuration of the pressure sensing unit 20, the cap member 20a, the circular disk 20b, and the stopper 20c illustrated in FIG. 13. Meanwhile, the feature that distinguish the present invention from the prior art configuration lies in the fact that the cap member 21, which is made of stainless steel (SUS), includes a flat portion 21A, and that a connection hole 21a is provided in the flat portion 21A. Also, another difference is that the cap member 21 is laser-welded to the intermediate joint 3.

The female screw joint 1, which is brass or brazen, comprises a threaded hole 11 into which a male-threaded joint 5 of a conduit (see FIGS. 2, 3) is screwed; a cylindrical hole 12 whose diameter is smaller than that of the threaded hole 11; and a generally earthenware-mortar-shaped sloping surface 13 along the entire inner circumferential region where the threaded hole 11 and the cylindrical hole 12 are connected to each other, the sloping surface 13 being tapered with its diameter gradually increased from the cylindrical hole 12 toward the threaded hole 11. The sloping surface 13 is a circular arc surface slightly raised toward the intermediate joint 3. Also, a female-threaded portion 11a is provided on an inner surface of the threaded hole 11, the female-threaded portion 11a being adapted to connect the female screw joint 1 to the male-threaded joint 5 of the conduit.

The intermediate joint 3 is a cup-shaped member made of stainless steel (metallic material) as in the case of the cap member 21 of the pressure sensing unit 2. The intermediate joint 3 comprises a cylinder portion 31 in a shape of a cylinder complementary to the cylindrical hole 12 of the female screw joint 1; and a bugle-like sloping flange 32 provided at the entire periphery of an end of the cylinder portion 31, the end being on the side of the threaded hole 11, the flange 32 extending in a sloping manner upward with gradually increasing diameter.

A generatrix of a conical surface, which is a side surface, of the sloping flange 32 is parallel to a generatrix of a virtual conical surface in a hypothetical case where the raised portion of the sloping surface 13 of the female screw joint 1 is assumed to be eliminated. These generatrices extend with an angle of substantially 45 degrees with respect to a central axis L. Also, a connection hole 31a is provided at the centre of the flat portion 31A of the cylinder portion 31, the connection hole 31a being adapted to be in communication with the connection hole 21a of the cap member 21. It is contemplated that the intermediate joint 3 is formed by press working of a stainless plate.

A pusher member 4 is fitted in the cylinder portion 31 of the intermediate joint 3. The pusher member 4 is a component which may be formed by cutting work. The pusher member 4 includes a supporting portion 41 adapted to be brought into abutment on an inner circumference of the cylinder portion 31; and a protrusion 42 provided at the centre of the supporting portion 41, the protrusion 42 protruding toward the threaded hole 11 of the female screw joint 1. Also, a notched groove 41 a is provided in the supporting portion 41, the notched groove 41a being U-shaped and communicating with the connection hole 31a of the intermediate joint 3. Further, the threaded hole 11 of the female screw joint 1 and the connection hole 31a communicates with each other via the notched groove 41a.

The exemplary manufacturing process of the pressure switch of this embodiment can be described as follows. First, the cap member 21, the circular disk 22, and the stopper 23 are placed in position to constitute an assembly, the circumferential region thereof is plasma-welded, and thus the pressure sensing unit 2 is constructed. In this state, the pressure of the pressure sensing unit 2 is adjusted. Next, the cylinder portion 31 of the intermediate joint 3 is fitted into the cylindrical hole 12 of the female screw joint 1, the fitting operation being performed on the side of the threaded hole 11 so that the flat portion 31 A of the cylinder portion 31 is brought into abutment on the flat portion 21A of the cap member 21 of the previously-calibrated pressure sensing unit 2. The cylinder portion 31 and the cap member 21 are joined by laser welding of the circumferential region of the interface between the cylinder portion 31 and the cap member 21. After that, the pressure sensing unit 2 is placed via an O-ring 8 in abutment on the switch 6, and secured to an end (switch 6) of a terminal platform 63 by means of swaging with a swaging plate 7.

The pressure switch in one embodiment having the above-described configuration includes the sloping flange 32 of the intermediate joint 3 opposed to the sloping surface 13 of the female screw joint 1, and, as shown in FIG. 3, the male-threaded joint 5 of the conduit is connected to the female screw joint 1.

The male-threaded joint 5 includes a male-threaded portion 51a on the surface of a tubular portion 51. The female screw joint 1 is connected to the male-threaded joint 5 with the male-threaded portion 51a screwed into the female-threaded portion 11a of the female screw joint 1. Thus, the conical surface 5a at the edge of the male-threaded joint 5 is pressed into contact with the inside of the sloping flange 32 of the intermediate joint 3, so that the sloping flange 32 and the sloping surface 13 of the female screw joint 1 are joined.

Also, the male-threaded joint 5 includes a check valve 52 provided in the tubular portion 51. The check valve 52 is adapted to prevent fluid leakage in a disconnected state (where the female screw joint 1 is not connected to the male-threaded joint 5). The pin 52a is pressed by the protrusion 42 of the pusher member 4, so that the male-threaded joint 5 (i.e., the conduit) and the inside of the intermediate joint 3 are brought into communication with each other.

At this point, the sloping surface 13 constitutes a circular arc surface raised toward the sloping flange 32, so that the sloping flange 32 is pressed from within by virtue of the conical surface 5a at the end of the male-threaded joint 5. As a result, when the sloping surface 13 is brought into contact with the sloping flange 32, the circle portion at the apex of the raised circumferential portion of the sloping surface 13 is first brought into contact with the sloping flange 32 and the area of contact between the sloping surface 13 and the sloping flange 32 increases starting from the position of the circle. Accordingly, the firm attachment between the sloping surface 13 and the sloping flange 32 is improved.

As has been described in the foregoing, when the female screw joint 1 is not connected to the male-threaded joint 5, the intermediate joint 3 is only in fitting engagement with the female screw joint 1, and the female screw joint 1 remains rotatable relative to the intermediate joint 3 about the central axis P. It is appreciated that, in order to screw the female screw joint 1 onto the male-threaded joint 5, what should be done is simply rotate the female screw joint 1. This means that the connecting operation does not cause damage to the pressure sensing unit 2 or twisting of the lead wires 641, 651. Also, since the intermediate joint 3 connected to the female screw joint 1 can be afterward connected by welding to the pressure sensing unit 2, it is made possible to previously calibrate the pressure sensing unit 2 and the switch 6, which allows for more flexible manufacturing process.

With a view to increasing firm attachment between the intermediate joint 3 and the male-threaded joint 5, the following configuration may be used: Zinc may be vapor-deposited upon an inner surface of the sloping flange 32 of the intermediate joint 3; Copper coating may be provided upon the sloping flange 32 of the intermediate joint 3; Dipping of fluorine resin or fluorine-containing rubber may be provided upon the inner surface of the sloping flange 32 of the intermediate joint 3.

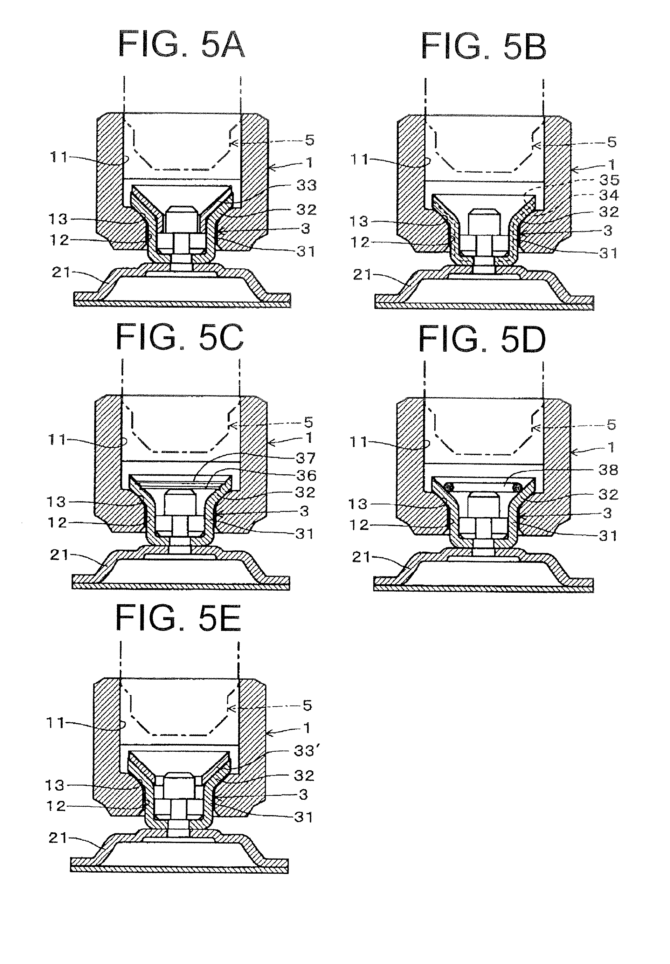

FIG 5 illustrates another configuration for increased firm attachment between the intermediate joint 3 and the male-threaded joint 5. As shown in FIG. 5A, there may be provided a copper sheet 33 inside of the sloping flange 32 of the intermediate joint 3 (i.e., between the sloping flange 32 and the male-threaded joint 5). Thus, the copper sheet 33 is plastic deformed when the female screw joint 1 is tightly connected to the male-threaded joint 5, so that the firm attachment between the sloping flange 32 and the male-threaded joint 5 is improved.

Also, as shown in FIG. 5B, the intermediate joint 3 may be made of clad material comprising a plurality of layers, i.e., a first layer 34 (outer layer) made of stainless-steel in the same manner as the cap member 21 and an inner second layer 35 made of copper material. This configuration achieves more firm attachment between the sloping flange 32 and the male-threaded joint 5 by virtue of plastic deformation of the inner second layer 35 made of copper material of the intermediate joint 3 when the female screw joint 1 is secured to the male-threaded joint 5.

Further, as shown in FIG. 5C, a plurality of concentric grooves 36, 37 may be formed on the inner surface of the sloping flange 32 of the intermediate joint 3, the concentric grooves 36, 37 being concentric with respect to the sloping flange 32. Thus, the sloping flange 32 and the male-threaded joint 5 are joined via multiple points, i.e., the inner portion with reference to the groove 36, the intermediate portion between the groove 36 and the groove 27, and the outer portion with reference to the groove 37. Accordingly, the firm attachment between the sloping flange 32 and the male-threaded joint 5 is further improved.

Also, as shown in FIG 5D, there may be provided an O-ring 38 inside of the sloping flange 32 of the intermediate joint 3 (i.e., between the sloping flange 32 and the male-threaded joint 5), the O-ring 38 being concentric with the sloping flange 32. Thus, the firm attachment between the sloping flange 32 and the male-threaded joint 5 is further increased.

Further, as shown in FIG 5E, which is a variant configuration derived from that of FIG 5A, a copper sheet 33' may only be provided inside of the sloping flange 32, the copper sheet 33' does not include the portion adapted to be fitted in the cylinder portion 31. This configuration also achieves the firm attachment between the sloping flange 32 and the male-threaded joint 5.

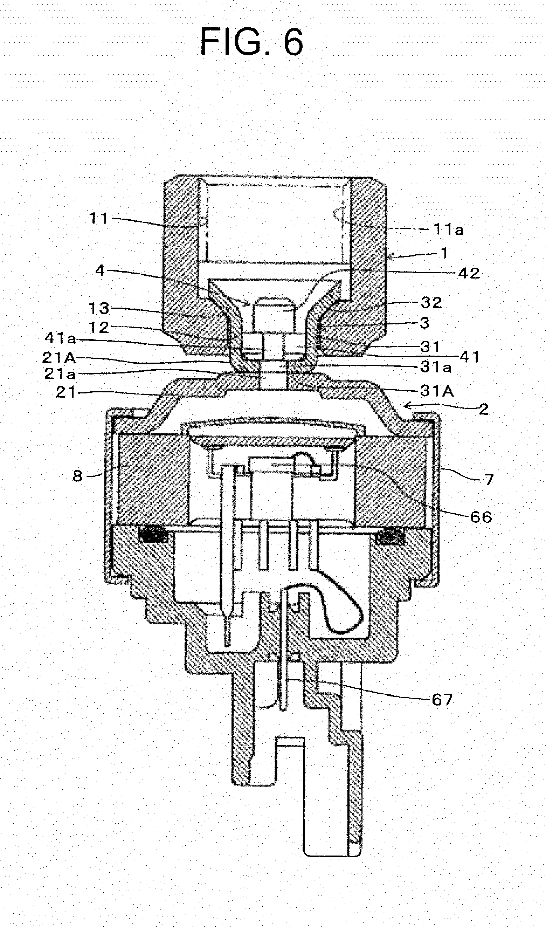

In the above-described first embodiment, the pressure responsive apparatus has been described in the context of the pressure switch. Nevertheless, as shown in FIG. 6, the present invention may be applied to a pressure responsive apparatus configured as a pressure sensor. In FIG. 6, the same or like elements as in FIG. 1 are indicated by the same reference signs and redundant detailed description thereof will be omitted.

The pressure sensing unit 2 of the pressure sensor according to the second embodiment also includes a cap member 21 secured via a swaging plate 7 to a case 8, and, as in the first embodiment, the intermediate joint 3 is joined by welding to the cap member 21 so that the female screw joint 1 is mounted thereto. Further, the pressure sensor uses a sensor element 66 and detects the fluid pressure in the cap member 21. In accordance with the detected fluid pressure, a sensor signal is output on a terminal 67, via a not-shown lead wire, and to an external device.

In this pressure sensor of the second embodiment, the functionality of the intermediate joint 3 and the female screw joint 1 is the same as in the first embodiment.

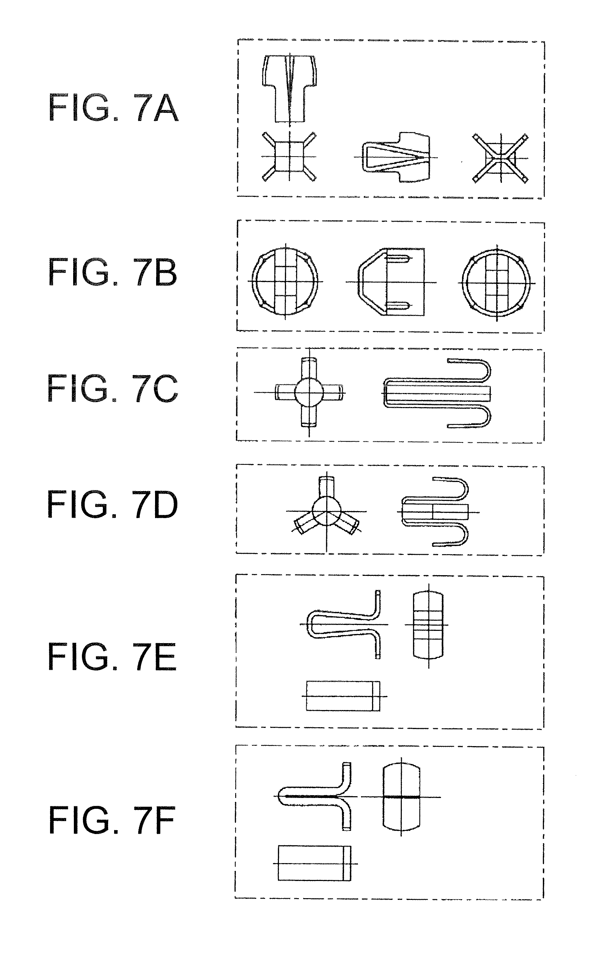

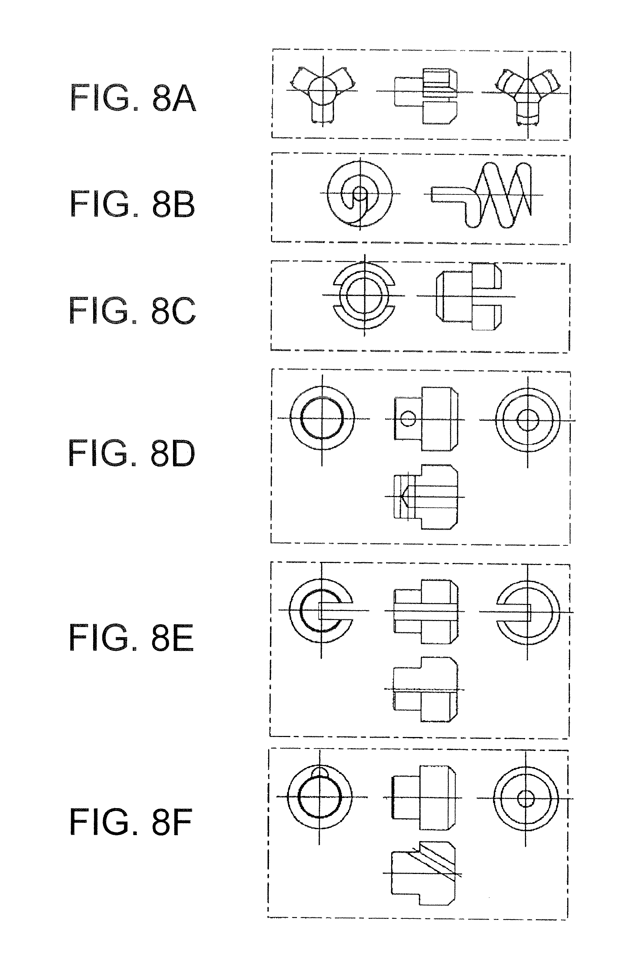

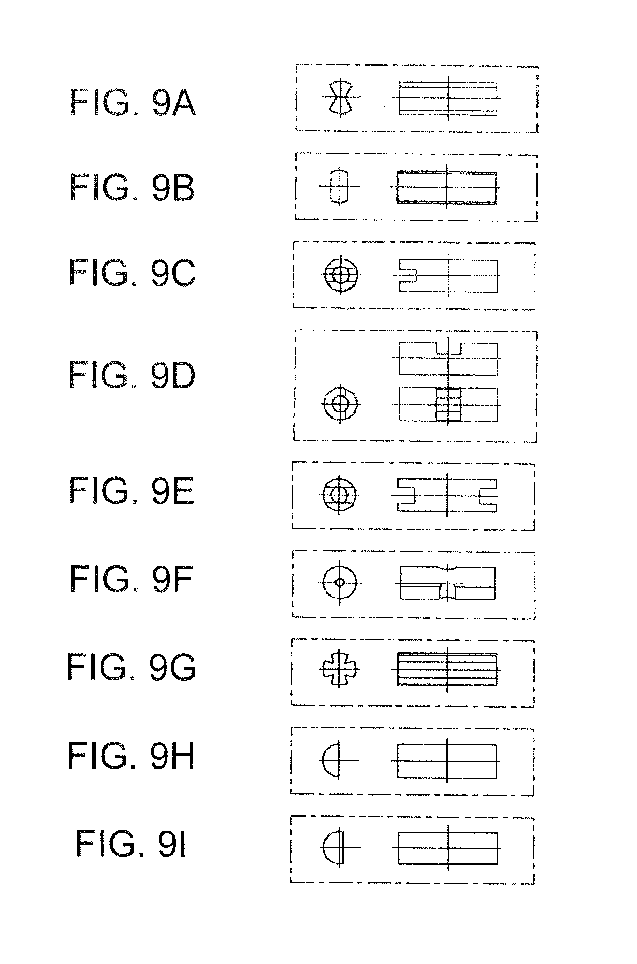

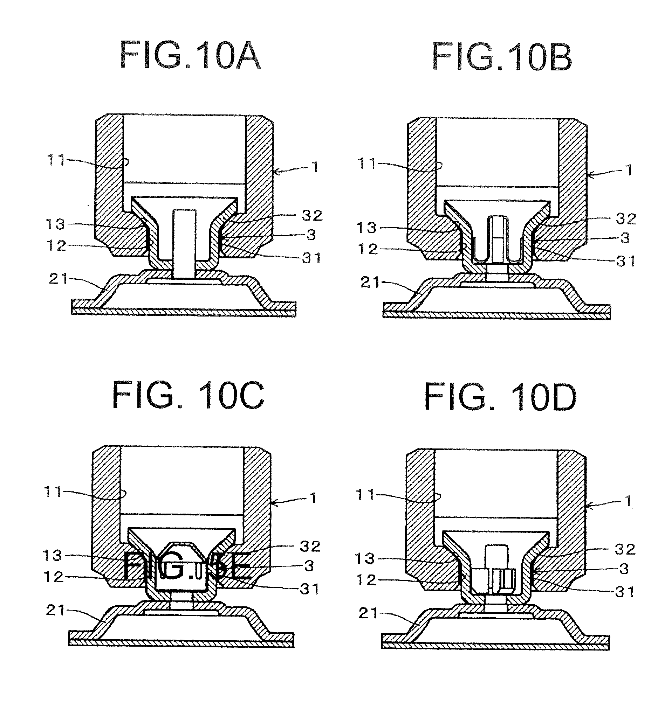

FIGS. 7 to 9 illustrate examples of the pusher member. The examples of FIGS. 7 and 8 are the same as in the first and second embodiments or alternatively, as shown in FIG. 10B to 10D, a type fitted in "d." The example of FIG. 9 is a type adapted to be pressed (press-fitted) into the connection hole 31a of the intermediate joint 3 as shown in FIG 10A.

FIGS. 7A to 7F depict press-type examples obtained by press working of a metal sheet, which may be attached in such a manner as illustrated in FIGS. 10B and 10C. Also, FIG. 8A depicts a resin-molded-type example which may be attached in such a manner as illustrated in FIG 10D. FIG. 8B depicts a coil-shaped-type example. FIGS. 8C to 8F are obtained by cutting work, in which FIG. 8C illustrates the pusher member according to the first and second embodiments.

The pusher member may include a throughhole or a notch in order that the communication between the cap member 21 and the threaded hole 11 of the female screw joint 1 is not hindered. Also, it is appreciated that the pusher member can be omitted when the male-threaded joint of the conduit does not have a check valve.

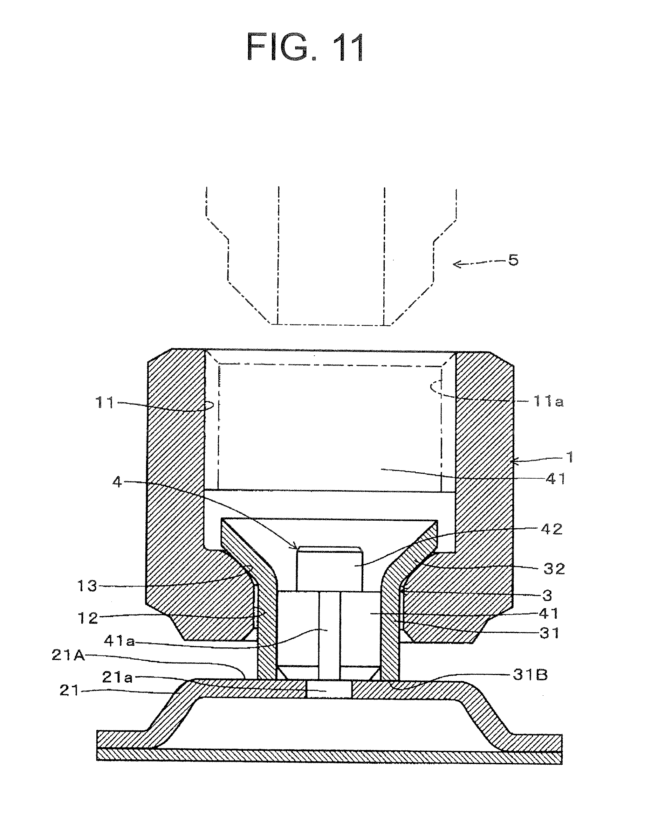

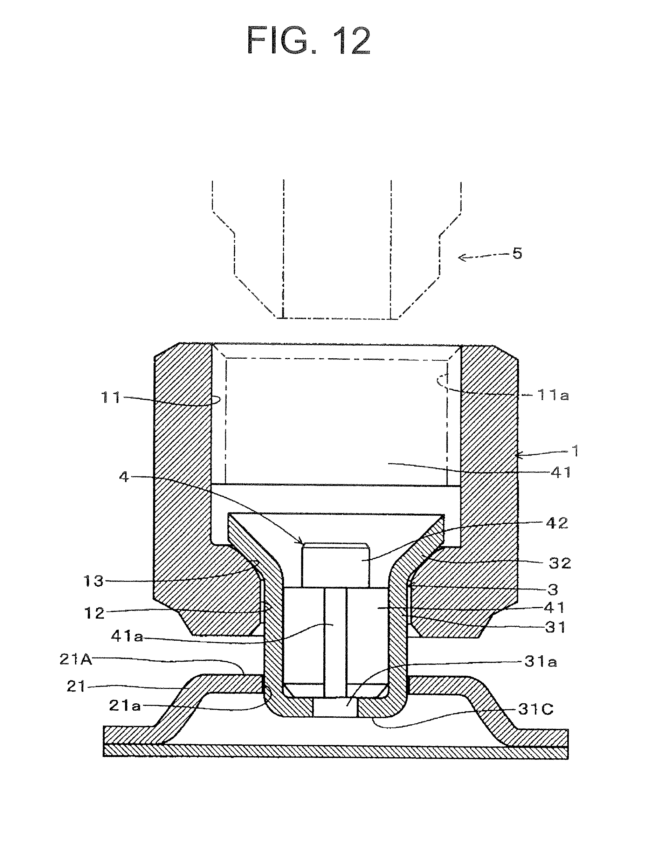

FIG. 11 is an enlarged cross-sectional view of the principal part of a third embodiment, and FIG 12 is an enlarged cross-sectional view of the principal part of a fourth embodiment, each illustrating other exemplary connection structures between the intermediate joint 3 and the cap member 21. The same or like elements as in FIG 2 are indicated by the same reference signs and redundant detailed description thereof will be omitted.

In the example of FIG 11, the flat portion is eliminated from the cylinder portion 31 of the intermediate joint 3, a small-mouth portion 31B of this cylinder portion 31 is brought into abutment on a flat portion 21A of the cap member 21, and the region surrounding this small-mouth portion 31B is joined by laser welding. In the example of FIG 12, the flat portion 21A of the cap member 21 includes an opening 21a complementary to the outer circumference of the cylinder portion 31, and an end of the cylinder portion 31 is fitted into this opening 21 a, and the region surrounding the opening 21a are joined by laser welding. It should be appreciated that the structure of the third and fourth embodiments can be applied to such a pressure switch and pressure sensor as described in the first and second embodiments.

The foregoing embodiment described a pressure responsive apparatus configured as a pressure switch and a pressure sensor, but it is appreciated that the present invention is applicable to such an apparatus as has a cap member for detection of fluid pressure and introduces the fluid into this cap member via a female screw joint. Also, the foregoing embodiments described a case where at least the cap member out of the cap member and the intermediate joint is made of stainless steel. However, the present invention is not limited to this specific configuration, and the connection structure of the present invention may be effective when the cap member and the intermediate joint are the same metallic components.

### Reference Signs

- 1: Female screw joint
- 11: Threaded hole
- 12: Cylindrical hole
- 13: Sloping surface
- 11a: Female-threaded portion
- 2: Pressure sensing unit
- 21: Cap member
- 21A: Flat portion
- 21 a: Connection hole
- 3: Intermediate joint
- 31: Cylinder portion
- 32: Sloping flange
- 31A: Flat portion
- 31a: Connection hole
- 33: Copper sheet
- 34: First layer
- 35: Second layer
- 36: Groove
- 37: Groove
- 38: O-ring
- 4: Pusher member
- 5: Male-threaded joint
- 51a: Male-threaded portion
- 5a: Conical surface
- 52: Check valve
- 52a: Pin
- 641: Lead wire
- 651: Lead wire

## Claims

1. A connection structure connecting a pressure sensing unit to a female screw joint in a pressure responsive apparatus, the female screw joint being made of a metallic material and adapted to be connected to a male-threaded joint of a conduit for flowing fluid therethrough whose pressure is to be detected, and the pressure sensing unit having a metallic cap member into which the fluid from the female screw joint is introduced, the connection structure comprising:
(a) the female screw joint including (i) a threaded hole into which the male-threaded joint of the conduit is screwed, (ii) a cylindrical hole having a diameter smaller than that of the threaded hole, and (iii) a sloping surface along an entire inner circumferential region connecting the threaded hole to the cylindrical hole, the sloping surface being tapered with its diameter gradually increased from the cylindrical hole toward the threaded hole; and
(b) an intermediate joint made of a same metallic material as that of the cap member, the intermediate joint including (i) a cylinder portion complementary to the cylindrical hole of the female screw joint, and (ii) a sloping flange provided at an entire periphery of an end of the cylinder portion, the end being proximate to the threaded hole, the sloping flange extending in a sloping manner with gradually increasing diameter, the cylinder portion of the intermediate joint being adapted to be inserted from a side proximate to the threaded hole of the female screw joint into the cylindrical hole so that the sloping flange of the intermediate joint is opposed to the sloping surface of the female screw joint, an end of the cylinder portion of the intermediate joint being joined by welding to the cap member, the male-threaded joint being screwed into the threaded hole of the female screw joint, and the sloping flange being pressed by an end of the male-threaded joint so that the interface between the sloping flange and the sloping surface is sealed.

2. The connection structure for the pressure sensing unit and the female screw joint according to claim 1, wherein the sloping surface of the female screw joint is formed in a shape of a circular arc surface raised toward the sloping flange.

3. The connection structure for the pressure sensing unit and the female screw joint according to claim 1, further comprising a copper sheet between the sloping flange of the intermediate joint and the male-threaded joint.

4. The connection structure for the pressure sensing unit and the female screw joint according to claim 1, wherein the intermediate joint is made of a clad material comprising an outer first layer made of the same metallic material as that of the cap member and an inner second layer made of a copper material.

5. The connection structure for the pressure sensing unit and the female screw joint according to claim 1, further comprising a plurality of concentric grooves provided on an inner surface of the sloping flange of the intermediate joint, the concentric grooves being concentric with the sloping flange.
